Europäisches Patentamt

European Patent Office

Office européen des brevets

(11) Veröffentlichungsnummer: **0 224 667**

**A2**

(12) **EUROPÄISCHE PATENTANMELDUNG**

(21) Anmeldenummer: **86112742.1**

(22) Anmeldetag: **16.09.86**

(51) Int. Cl.⁴: **A 01 D 78/10**

(30) Priorität: **06.12.85 DE 3543264**

(43) Veröffentlichungstag der Anmeldung:
**10.06.87 Patentblatt 87/24**

(84) Benannte Vertragsstaaten:
**AT CH DE FR IT LI NL**

(71) Anmelder: **Klöckner-Humboldt-Deutz AG
Zweigniederlassung Fahr**

**D-7702 Gottmadingen(DE)**

(72) Erfinder: **Maier, Martin
Hilzingerstrasse 23
D-7702 Gottmadingen(DE)**

(72) Erfinder: **Wessel, Ulrich
Hilzingerstrasse 33
D-7702 Gottmadingen(DE)**

(72) Erfinder: **Eisenmann, Bernhard
Leipferdingerstrasse 12
D-7708 Tengen 1(DE)**

(54) **Kreiselzettwender.**

(57) Der Kreiselzettwender weist mindestens vier Kreisel auf, wobei jeder Kreisel an einem Führungsholm angeordnet ist, der sich über ein Laufrad am Boden abstützt, während an einem Querträger mindestens vier Tragbalkenteile angelenkt sind, deren jeder mit einem Führungsholm starr verbunden ist. Der Querträger weist an seinen beiden Enden je eine im wesentlichen senkrechte Schwenkachse auf um die alle Tragbalkenteile bis in eine Transportstellung verschwenkbar sind, wobei an den den senkrechten Schwenkachsen abgewandten Enden der beiden innersten Tragbalkenteile je eine im wesentlichen waagrechte Schwenkachse vorgesehen ist um die die beiden äußeren Tragbalkenteile zur Bodenanpassung verschenkbar sind.

FIG.2

EP 0 224 667 A2

Die Erfindung betrifft einen Kreiselzettwender mit mindestens vier Kreiseln, wobei jeder Kreisel an einem Führungsholm angeordnet ist, der sich über ein Laufrad am Boden abstützt und mit einem Querträger, der ein Winkelgetriebe aufweist und an dem mindestens vier Tragbalkenteile angelenkt sind, deren jeder mit einem Führungsholm starr verbunden ist.

Aus der DE-AS 12 35 057 ist eine Kreiselheuwerbungsmaschine mit wenigstens vier Zinkenkreiseln bekannt, die über Tragteile auf dem Erdboden abgestützt sind und an einem aus wenigstens drei über Kreuzgelenke miteinander verbundenen Teilen bestehenden Fahrgestell angeordnet sind, wobei die äußeren Fahrgestellteile jeweils um die aufwärts geneigte Schwenkachse der beiden Schwenkachsen des Kreuzgelenkes in die Transportstellung zurückklappbar sind. Bei dieser Maschine bildet die vertikale Achse jedes Kreuzgelenkes zugleich die Drehachse des entsprechenden Zinkenkreisels. Damit können aber die beiden mittleren Zinkenkreisel an der durch die aufwärts gerichtete Schwenkachse der beiden Schwenkachsen jedes Kreuzgelenks ermöglichten Verschwenkung der äußeren Fahrgestellteile gegenüber dem mittleren Fahrgestellteil entgegen der Fahrtrichtung in die Transportstellung und zurück in die Arbeitsstellung nicht teilnehmen. Die Breite der Maschine in der Transportstellung wird demzufolge durch die normale Arbeitsbreite der beiden mittleren Zinkenkreisel bestimmt. Da der

- 2 -

mittlere Fahrgestellteil mit den zugehörigen Kreuzgelenken einen starren Abschnitt bildet, ändert sich die Lage der an den Enden des mittleren Fahrgestellteiles angeordneten beiden mittleren Zinkenkreisel in bezug auf diesen Fahrgestellteil nicht.

Um die Transportbreite weiter zu verringern, ist aus der DE-AS 19 35 195 eine Kreiselheuwerbungsmaschine bekannt, bei der die Kreuzgelenke der die Zinkenkreisel unterstützenden Fahrgestellteile im Abstand von und zwischen den Tragteilen der beiden mittleren Zinkenkreisel angeordnet sind. Zwar nehmen aufgrund dieser Ausgestaltung sämtliche Zinkenkreisel, also auch die beiden mittleren Zinkenkreisel, an der Schwenkbewegung der Fahrgestellteile bei Zurückklappen in die Transportstellung und umgekehrt teil, wodurch die Gesamtbreite der Maschine in der Transportstellung geringer ist als bei herkömmlichen Kreiselzettwendern, jedoch sind zum einen die Kreuzgelenke teure und störanfällige Bauteile und zum anderen ist nunmehr der Abstand der Laufräder der beiden innersten Kreisel in Transportstellung so gering geworden, daß es der Maschine an einer ausreichenden Richtungsstabilität beim Transport fehlt.

Aufgabe der vorliegenden Erfindung ist es, einen Kreiselzettwender der eingangs näher genannten Art derart auszugestalten, daß er einfacher und damit billiger herstellbar ist und beim Transport eine bessere Richtungsstabilität aufweist.

Zur Lösung dieser Aufgabe wird vorgeschlagen, daß der Querträger an seinen beiden Enden je eine im wesentlichen senkrechte Schwenkachse aufweist, um die alle Tragbalkenteile bis in eine Transportstellung verschenkbar sind und daß an den den senkrechten Schwenkachsen abgewandten Enden der beiden innersten Tragbalkenteile je eine im wesentlichen waagrechte Schwenkachse vorgesehen ist um die die beiden äußeren Tragbalkenteile zur Bodenanpassung verschwenkbar sind.

Vorteilhafterweise sind sowohl die beiden zwischen den beiden inneren Kreiseln liegenden senkrechten Schwenkachsen als auch die beiden außerhalb der inneren Kreisel liegenden waagrechten Schwenkachsen in unmittelbarer Nähe der Führungsholme für die inneren Kreisel angeordnet.

Zum Antrieb der Kreisel vom Winkelgetrieb des Querträgers aus kann ein Doppelkreuzgelenk im Bereich der senkrechten Schwenkachsen angeordnet sein, während im Bereich der waagrechten Schwenkachsen ein offenes Gabelgelenk mit Rollenlager angeordnet sein kann.

Vorteilhafterweise sind die Laufräder der beiden inneren Kreisel an Auslegern derart schwenkbar befestigt, daß sie in Arbeitsstellung des Kreiselzettwenders und in Fahrtrichtung gesehen vor den Führungsholmen der inneren Kreisel 7 und in Transportstellung des Kreiselzettwenders außen und neben den inneren Tragbalkenteilen liegen.

Die Laufräder der äußeren Kreisel können schwenkbar an den Führungsholmen befestigt sein.

Besonders vorteilhaft ist es, wenn die Laufräder der äußeren Kreisel zur selbsttätigen Verstellung beim Verschwenken der äußeren Kreisel in die Transportstellung über eine Koppelstange mit dem Querträger verbunden sind.

Am Querträger kann vorzugsweise ein Hydraulikzylinder mit zwei Zugstangen zum Verschwenken der Kreisel vorgesehen sein.

Besonders günstig ist es, wenn im Bereich der senkrechten Schwenkachsen Arretiersegmente mit mehreren Feststellpunkten vorgesehen sind, die über Zugseile vom Schleppersitz aus betätigbar sind.

Der erfindungsgemäße Kreiselzettwender mit zwei senkrechten Schwenkachsen und zwei waagrechten Schwenkachsen, die beidseits der Führungsholme für die innersten Tragbalkenteile vorgesehen sind, läßt sich besonders einfach und wirtschaftlich herstellen. Aufgrund der Verschwenkung sämtlicher Kreisel nach hinten in die Transportstellung bei gleichzeitiger nach außen erfolgender Verschwenkung der beiden Laufräder für den inneren Kreisel erzielt man eine schmale Transportbreite und eine ausreichende Richtungsstabilität aufgrund der breiteren Spurweite der vorderen Laufräder und des langen Radstandes zum Zugfahrzeug.

Im folgenden wird die Erfindung anhand der Zeichnung näher erläutert, in der ein vorteilhaftes Ausführungsbeispiel eines erfindungsgemäßen Kreiselzettwenders dargestellt ist. Es zeigen:

Figur 1 schematisch eine Draufsicht auf einen Kreiselzett-
        wender mit vier Kreiseln in Arbeitsstellung;

Figur 2 eine Draufsicht auf den Kreiselzettwender in Transportstellung.

In den Figuren ist ein Kreiselzettwender mit vier Zinkenkreiseln 1 bis 4 dargestellt, die paarweise gegenläufig umlaufen. Dieser Zinkenkreisel weist in herkömmlicher Weise Arme auf, an denen entsprechende Arbeitszinken befestigt sind.

Ein Querträger 5 mit einem Winkelgetriebe 6 ist mit einem nicht dargestellten Schlepper verbindbar, der den Kreiselzettwender in Richtung des Pfeiles A fortbewegt. An beiden
Enden des Querträgers 5 sind im wesentlichen senkrechte
Schwenkachsen 10, 11 vorgesehen, an denen jeweils ein Tragbalkenteil 16, 17 angelenkt ist. In geringem Abstand von
den Schwenkachsen 10, 11 sind nun die beiden innersten
Kreisel 2, 3 mittels ihrer Führungsholme 13, 14 an den
Tragbalkenteilen 16, 17 befestigt. An den den senkrechten
Schwenkachsen 10, 11 abgewandten Enden der Tragbalkenteile
16, 17 sind zwei waagrechte Schwenkachsen 20, 21 vorgesehen, an denen jeweils ein weiterer Tragbalkenteil 18, 19
angelenkt ist. An den den waagrechten Schwenkachsen 20, 21
abgewandten Enden der Tragbalkenteile 18, 19 sind jeweils
ein weiterer Kreisel 1, 4 angeordnet. Die waagrechten
Schwenkachsen liegen in Arbeitsstellung der Maschine in
Fahrtrichtung.

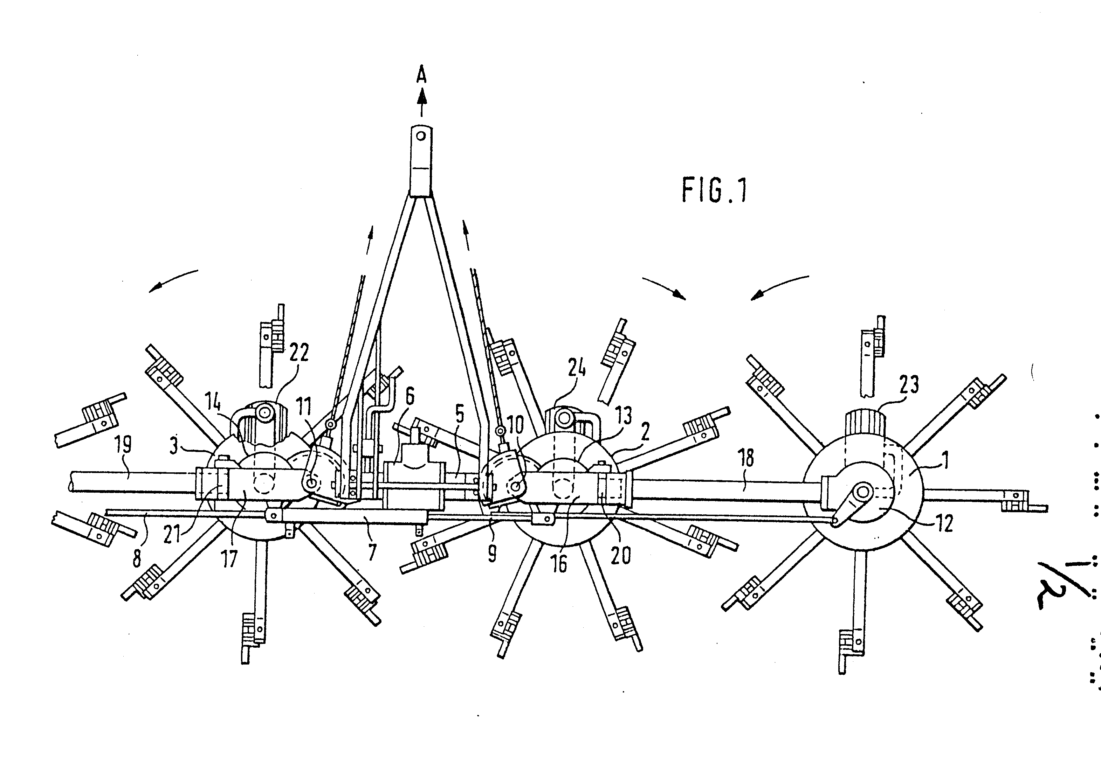

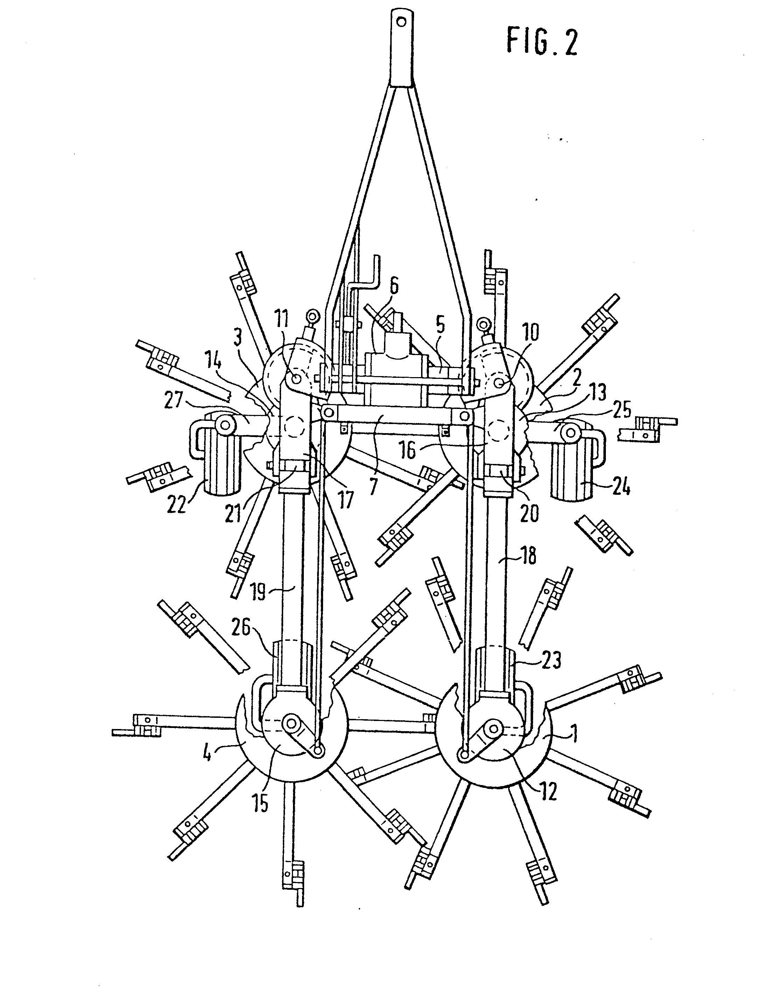

Wie in Figur 1 ferner angedeutet, drehen sich die Kreiselpaare 1, 2 und 3, 4 gegenläufig zueinander und wirken damit zusammen. Der Antrieb für die Kreisel erfolgt dabei
vom Schlepper über das Winkelgetriebe 6 am Querträger 5
und gegebenenfalls über ein Doppelkreuzgelenk im Bereich
der senkrechten Schwenkachsen 10, 11. Am Querträger 5 ist
ferner noch ein doppelt wirkender Hydraulikzylinder 7 vorgesehen, mit dem die Tragbalkenteile 16, 18 und 17, 19 zusammen mit den zugehörigen Kreiseln 1 bis 4 um die senkrechten Schwenkachsen 10, 11 nach hinten bis in eine Transportstellung (Figur 2) verschwenkt werden können. Zu diesem Zweck erstrecken sich zwei Kolbenstangen 8, 9 vom Hydraulikzylinder 7 bis zu geeigneten Anschlägen in der Nähe der Führungsholme für die Kreisel.

Die vier Kreisel 1, 2, 3 , 4 sind über Führungsholme 12, 13, 14, 15 derart an den Tragbalkenteilen 16, 17, 18, 19 des Kreiselzettwenders angeordnet, daß, wie aus Figur 2 ersichtlich, beim Verschwenken in die Transportstellung sämtliche Kreisel verschwenkt werden und ineinandergreifen. Zum Verschenken des Kreiselzettwenders in die Transportstellung wird zunächst die Maschine mit der Stellkurbel so weit verschwenkt bis die Führungsholme 12, 13, 14, 15 und die parallel zu den Führungsholmen verlaufenden inneren Schwenkachsen 10, 11 senkrecht stehen. Nun können die Kreisel 1 bis 4 nach hinten verschenkt werden. Durch die innerhalb der inneren Kreisel 2, 3 liegenden senkrechten Schwenkachsen 10, 11 wird der Achsabstand der Kreisel in bekannter Weise verkleinert.

An jedem Führungsholm für die Kreisel ist ein Nachlaufrad vorgesehen, auf dem sich der entsprechende Kreisel am Boden abstützt. Die Nachlaufräder 22, 24 für die beiden inneren Kreisel 2 und 3 sind dabei über Ausleger 25, 27 derart an den Führungsholmen 13, 14 befestigt, daß, wie Figur 1 zeigt, die Nachlaufräder in Arbeitsstellung der Maschine und in Fahrtrichtung A gesehen, vor den zugehörigen Tragbalkenteilen 17, 16 angeordnet sind. Beim Verschwenken in die Transportstellung (Figur 2) bewirken die Ausleger 25, 27, daß die beiden
Laufräder 22, 24 für die inneren Kreisel außerhalb der
beiden Tragbalkenteile 16, 17 angeordnet sind und so die
Spurweite dieser Laufräder erhöhen. Die Laufräder 22, 24
selbst sind bezüglich der Ausleger 25, 27 verschwenkbar.

Die beiden Laufräder 23, 26 für die äußeren Kreisel 1, 4
können direkt unterhalb der Führungsholme 12, 15 angeordnet sein und sind ebenfalls schwenkbar, wobei sie über
eine Koppelstange mit dem Querträger 5 verbunden sein
können, so daß eine automatische Verschwenkung von der
Arbeitsstellung in die Transportstellung erfolgt.

Der Kreiselzettwender kann eine Stellung einnehmen, die
insbesondere zum Feldrandräumen geeignet ist. Zu diesem
Zweck sind im Bereich der senkrechten Schwenkachsen 10,
11 nicht dargestellte Arretiersegmente mit mehreren Fixierpunkten angeordnet, wobei Fixierbolzen in die Arretiersegmente eingreifen. Die Entriegelung dieser Fixierbolzen
kann einzeln durch zwei getrennte Zugseile erfolgen, die
vom Schleppersitz aus betätigt werden können. Wird nun
einer der Fixierbolzen entriegelt und der Hydraulikzylinder 7 am Querträger 5 betätigt, so schwenkt nur eine
Maschinenhälfte z.B. die Tragbalkenteile 17, 19 mit den
zugehörigen Kreiseln 3, 4 bis zum nächsten Arretierpunkt.
Auf diese Weise kann diese Maschinenhälfte zum Feldrandräumen etwas schräg zur Fahrtrichtung A gestellt werden.

-10-

Die waagrechten Schwenkachsen 20, 21, die die Tragbalkenteile 16 und 18 sowie 17 und 19 miteinander verbinden, können offene Gabelgelenke mit Rollenlagern sein. Dies bedeutet, daß zum Ausgleich von Bodenunebenheiten die beiden
äußeren Kreisel 1, 4 entsprechende Schwenkbewegungen ausführen können, wobei aufgrund der großen Überlappung der
Zinken der Kreisel 3, 4 bzw. 1, 2 die Rechwirkung zwischen
diesen zusammenwirkenden Kreiseln nicht beeinträchtigt
wird.


Der erfindungsgemäße Kreiselzettwender ist aufgrund der
einfachen vier Gelenke billig herstellbar und weniger störanfällig. Durch das Anordnen der zwei Laufräder an den inneren Kreiseln an Auslegern wird trotz des geringen Abstands der Führungsholme in Transportstellung voneinander
eine breitere Spurweite der Laufräder erreicht. Zusammen
mit den beiden hinteren Laufrädern und des langen Radstandes zum Schlepper wird eine bessere Richtungsstabilität gewährleistet.

11513

Klöckner-Humboldt-Deutz AG

Zweigniederlassung Fahr

7702 Gottmadingen

Kreiselzettwender

Patentansprüche

1. Kreiselzettwender mit mindestens vier Kreiseln, wobei jeder Kreisel an einem Führungsholm angeordnet ist, der sich über ein Laufrad am Boden abstützt, und mit einem Querträger, der ein Winkelgetriebe aufweist und an dem mindestens vier Tragbalkenteile angelenkt sind, deren jeder mit einem Führungsholm starr verbunden ist, dadurch gekennzeichnet, daß der Querträger (5) an seinen beiden Enden je eine im wesentlichen senkrechte Schwenkachse (10, 11) aufweist, um die alle Tragbalkenteile (16 bis 19) bis in eine Transportstellung verschwenkbar sind, und daß an den den senkrechten Schwenkachsen abgewandten Enden der beiden innersten Tragbalkenteile (16, 17) je eine im wesentlichen waagrechte Schwenkachse (20, 21) vorgesehen ist um die die beiden äußeren Tragbalkenteile (17, 18) zur Bodenanpassung verschwenkbar sind.

2. Kreiselzettwender nach Anspruch 1, dadurch gekennzeichnet, daß sowohl die beiden zwischen den beiden inneren
Kreiseln liegenden senkrechten Schwenkachsen (10, 11)
als auch die beiden außerhalb der inneren Kreisel liegenden waagrechten Schwenkachsen (20, 21) in unmittelbarer Nähe der Führungsholme (13, 14) für die inneren
Kreisel (2, 3) angeordnet sind.

3. Kreiselzettwender nach Anspruch 1, dadurch gekennzeichnet, daß zum Antrieb der Kreisel (1 bis 4) vom Winkelgetriebe des Querträgers (5) aus ein Doppelkreuzgelenk im
Bereich der senkrechten Schwenkachsen (10, 11) angeordnet ist.

4. Kreiselzettwender nach Anspruch 1, dadurch gekennzeichnet, daß im Bereich der waagrechten Schwenkachsen (20,
21) ein offenes Gabelgelenk mit Rollenlager angeordnet
ist.

5. Kreiselzettwender nach einem der vorhergehenden Ansprüche, dadurch gekennzeichnet, daß die Laufräder (22, 24)
der beiden inneren Kreisel (2, 3) an Auslegern (25, 27)
derart verschwenkbar befestigt sind, daß sie in Arbeitsstellung des Kreiselzettwenders und in Fahrtrichtung A
gesehen vor den Führungsholmen (13, 14) der inneren
Kreisel und in Transportstellung des Kreiselzettwenders außen und neben den inneren Tragbalkenteilen (16, 17) liegen.

6. Kreiselzettwender nach einem der vorhergehenden Ansprüche, dadurch gekennzeichnet, daß die Laufräder (23, 26) der äußeren Kreisel (1, 4) schwenkbar an den Führungsholmen (12, 15) befestigt sind.

7. Kreiselzettwender nach Anspruch 6, dadurch gekennzeichnet, daß die Laufräder (23, 26) der äußeren Kreisel zur selbsttätigen Verstellung beim Verschwenken der äußeren Kreisel in die Transportstellung über eine Koppelstange mit dem Querträger (5) verbunden sind.

8. Kreiselzettwender nach einem der vorhergehenden Ansprüche, dadurch gekennzeichnet, daß am Querträger (5) ein Hydraulikzylinder (7) mit zwei Zugstangen (8, 9) zum Verschwenken der Kreisel (1 bis 4) vorgesehen ist.

9. Kreiselzettwender nach einem der vorhergehenden Ansprüche, dadurch gekennzeichnet, daß im Bereich der senkrechten Schwenkachsen (10, 11) Arretiersegmente mit mehreren Feststellbolzen vorgesehen sind, die über Zugseile vom Schleppersitz aus betätigbar sind.

1/2

FIG.1

FIG.2